# EUROPÄISCHE PATENTSCHRIFT

(11) **EP 1 116 756 B1**
(45) Veröffentlichungstag und Bekanntmachung des Hinweises auf die Patenterteilung: **10.03.2004**
(21) Anmeldenummer: 00127391.1
(22) Anmeldetag: 14.12.2000
(51) Int. Cl.: C09D 17/00, C09C 1/62, C09C 1/64, C09D 5/10

(54) **Fliess- und pumpfähiges Metallpigment-Halbfabrikat zur Herstellung von Farben und Lacken**
Flowable and pumpable metal pigment semi-finished product for preparing colours and paints
Semi-produit fluide et pompable comprenant un pigment metallique pour la préparation de couleurs et peintures

(30) Priorität: 15.01.2000 DE 10001437
(43) Veröffentlichungstag der Anmeldung: 18.07.2001
(73) Patentinhaber: Eckart GmbH & Co. KG, 90763 Fürth (DE)
(72) Erfinder: Korn, Andreas, 91284 Neuhaus (DE); Maul, Robert, 90610 Winkelhaid (DE)
(74) Vertreter: Schneck, Herbert, Dipl.-Phys., Dr.

(56) Entgegenhaltungen:
- DE-A- 19 728 856
- US-A- 5 348 579

## Beschreibung

Die Erfindung betrifft ein wäßriges metallpigmentiertes, gasungsstabiles, fließ- und pumpfähiges Halbfabrikat als Vorprodukt für die Herstellung von Farben und Lacken. Außerdem richtet sich die Erfindung auf eine entsprechende stabilisierte Metallpigmentpaste.

Metallpigmente finden vielfache Verwendung als Bestandteile von Farben und Lacken. Sie werden in der Regel mit einem oder mehreren Bindemitteln, einem oder mehreren Lösungsmitteln sowie unterschiedlichen Hilfsstoffen zu einer Farbe oder einem Lack verarbeitet. Die Metallpigmente werden zumeist in Pulver- oder Pastenform eingesetzt, in letzter Zeit auch als feste Konzentrate, Lösungsmittel ohne Bindemittel, aber auch in Form grobkörniger Teilchen. Eine weitere Darbietungsform sind flüssige Halbfabrikate, die Lösungsmittel und gegebenenfalls Bindemittel enthalten.

Das Einarbeiten von Metallpigmenten in wässrige Lacksysteme bringt unabhängig von der Darreichungsform eine Reihe von Schwierigkeiten mit sich. Metallpulver und -pasten lassen sich häufig nur schwer dispergieren. Insbesondere bei den flüssigen Halbfabrikaten kommt es zu chemischen Reaktionen mit Wasser und einer daraus resultierenden Wasserstoffemission, die in der Regel zum Verlust der optischen Eigenschaften führt. Die pulverförmigen Pigmente haben zudem den Nachteil, daß sie stark stauben und daher am Arbeitsplatz eine Anzahl von aufwendigen Maßnahmen, wie Ex-Schutz, erfordern.

EP 0 860 484 A2 beschreibt eine Dispersion von plättchenförmigen Pigmenten mit einem Pigmentgehalt von 20 - 55 % und einer bei Raumtemperatur flüssigen Trägersubstanz, welche mit Bindemitteln für wässrige Lacksysteme kompatibel sein soll. Wasser als Trägersubstanz wird in dieser Veröffentlichung nicht erwähnt und soweit von Stabilität die Rede ist, bezieht sich dies auf die Dispersion und nicht auf das Gasungsverhalten.

In der Veröffentlichung WO 98/53017 wird die Stabilisierung einer wässrigen Bronze-Druckfarbe mit einem Additivsystem aus einem emulgierbaren Wachs, einem Tensid, einer Base mit einem pH-Wert von 7-12 und wenigstens einem Additiv aus der Gruppe der Antioxidantien, Haftvermittler, Antistatikmittel, Nukleierungsmittel, Metalldesaktivatoren, Schmiermittel/Gleitmittel/Antiblockmittel, UV-Inhibitoren, Flammhemmer, Biozide sowie Wasser beschrieben.

In der DE 197 28 856 A1 wird eine wasserverdünnbare Beschichtungszusammensetzung vorgestellt, die wenigstens einen Phosphorsäureester und wenigstens ein Fettalkoholalkoxylat enthält.

In der Literatur wird eine Reihe von Verfahren zur Herstellung stabilisierter Metallpigmentpasten für den Einsatz in wässrigen Systemen beschrieben.

Im Patent US 5,348,579 werden mit Phosphosilikaten stabilisierte Aluminiumpasten erläutert. Die Pasten enthalten ausschließlich organische Lösungsmittel, jedoch kein Wasser.

US 5,356,469 beschreibt eine Metallpigmentpaste, die Lösungsmittel und ein Phosphosilikat-Pigment in Kombination mit dem Anion einer Heteropolysäure enthält. In der Beschreibung wird besonders herausgestellt, daß die Kombination aus Phosphosilikat-Pigment und Heteropolyanion wesentlich ist.

In US 4,693,754 wird eine Stabilisierung von Aluminiumpigmentpasten durch Vanadat und Chromat beschrieben. Die Aluminiumpigmente werden in der Kugelmühle oder in einem nachfolgenden Schritt mit einer Mischung aus Vanadium- und/oder Chromsalzen in Wasser und einer organischen Flüssigkeit behandelt.

Das Patent US 4,617,056 beschreibt eine Metallpigmentpaste auf der Basis von Phosphat, Molybdat und Chromat, wobei die für diese Stabilisierung notwendigen Ionen aus einem flüssigen Bindemittel stammen.

Gemäß der US 5,480,481 wird ein Aluminiumpigment mit Molybdänsäure beschichtet.

Nach der EP 0 104 075 werden Aluminiumteilchen mit "Vanadium" beschichtet.

Eine zweistufige Molybdat-Phosphorsäureester-Stabilisierung wird in EP 0 653 465 A 1 vorgestellt. Es wird hervorgehoben, daß die Stabilisierung ohne Einfluß auf optische oder lacktechnische Eigenschaften sei.

Eine in EP 0633 297 A1 beschriebene Molybdat-Phosphat-Stabilisierung ist der nach EP 0 653 465 A 1 sehr ähnlich.

EP 0 583 919 B1 beschreibt ebenfalls eine Molybdat-Stabilisierung.

Alle vorstehend aufgeführten bekannten Stabilisierungsverfahren weisen den Nachteil auf, daß sie bei pH- Werten über 9,0 in der Regel versagen und keinen positiven Einfluß auf die korrosionschutztechnischen und verarbeitungstechnischen Eigenschaften haben.

Zudem lassen sich Pasten nur schwer dispergieren und stehen damit einer schnellen, automatischen Verarbeitbarkeit entgegen. Die Lagerstabilität der bekannten wässrigen Halbfabrikate ist nicht ausreichend, die Pigmente agglomerieren leicht. Seitens der Industrie besteht aber gerade der Wunsch nach schneller Verarbeitbarkeit und zunehmender Automatisierung.

Der Erfindung liegt hiervon ausgehend die Aufgabe zugrunde, eine Darreichungsform für Metallpigmente bereitzustellen, die die oben erwähnten Nachteile nicht aufweist und zudem eine korrosionsschutztechnische Verbesserung des Endproduktes sowie universelle Kompatibilität ermöglicht. Die Darreichungsform soll insbesondere wäßrig, leicht dispergierbar, fließfähig, gasungsstabil, leichter handhabbar und einer automatisierten Verarbeitung zugänglich sein. Zudem soll eine fließ- und pumpfähige Zubereitung bereitgestellt werden, die für den industriellen Weiterverarbeiter wesentliche Vorteile bietet.

Diese Aufgabe wird erfindungsgemäß gelöst durch ein fließ- und pumpfähiges, gasungsstabiles Halbfabrikat auf wäßriger Basis zur Herstellung von Farben und Lacken, umfassend Wasser, ein vorstabilisiertes Metallpigment und ein Korrosionsschutzpigment.

Dieses erfindungsgemäße Halbfabrikat verbessert die korrosionsschutztechnischen Eigenschaften des entstehenden Lackfilms und ermöglicht auch den Einsatz von Metallpigmenten in Korrosionsschutz-Systemen, die zur Bekämpfung von Flash-Rust einen pH-Wert von > 9 haben. Generell vermittelt dieses System eine deutliche Verbesserung der Gasungsstabilität in für Metallpigmente kritischen Lackformulierungen.

Es hat sich überraschend gezeigt, daß eine Stabilisierung von Metallpigmenten in wässrigen, fließfähigen Halbfabrikaten durch Korrosionsschutzpigmente, z. B. Phosphosilicat-Pigmente, ohne weitere Zusätze dann möglich ist, wenn die Metallpigmente in an sich bekannter Weise vorstabilisiert werden.

Weiter hat sich herausgestellt, daß sich eine Aufarbeitung der Korrosionsschutzpigmente vor der Herstellung des Halbfabrikats, bei der sich die Pigmentteilchengröße verringert (von ca. 3 µm auf ca. 2.3 µm), günstig auf die optischen Eigenschaften, insbesondere für den Einsatz in optisch anspruchsvollen Applikationen, auswirkt. Dabei wird auch Agglomeratbildung der Korrosionsschutzpigmente verhindert.

Die Metallpigmente bestehen aus Aluminium, Kupfer, Zink, Zinn oder Legierungen dieser Elemente, bevorzugt aus Aluminium. Sie werden zweckmäßig durch Systeme aus phosphororganischen Verbindungen und Basen, durch Beschichtung mit Silicaten oder organisch modifizierten Silanen, durch Polymere (z. B. Acrylate) oder durch eines der vorstehend genannten Verfahren vorstabilisiert. Eine Stabilisierung ist auch durch Phosphorsäureester, wie in DE 39 30 687 beschrieben, möglich.

Das erfindungsgemässe Halbfabrikat enthält 10 bis 50 % Metallpigment, 0.1 bis 30 % aktives Korrosionschutzpigment sowie 0 bis 15 % Dispergieradditiv, 0 bis 2.5 % Entschäumer, 0 bis 1.5 % Thixotropiermittel und 89.9 bis 20 % Wasser. Das Korrosionsschutzpigment wird bevorzugt aus der Gruppe Strontium-Zink-Phosphosilikat, Zink-Aluminium-Polyphosphathydrat, Zink-Calcium-Aluminium-Strontium-Phosphatsilikathydrat, Zink-Calcium-Strontium-Orthophosphatsilikathydrat, Strontium-Aluminium-Polyphosphathydrat, Calcium-Aluminium-Polyphosphatsilikathydrat und Natrium- und/oder Calcium- und/oder Zink-Molybdat oder Phospho-Molybdat und Zinkphosphatkomplex ausgewählt.

Das Korrosionsschutzpigment liegt in einer bevorzugten Ausgestaltung der Erfindung in einer Anreibung vor, die 50 bis 90 % Korrosionsschutzpigment, 10 bis 50 % Wasser sowie 0 bis 20 % Dispergiermittel, 0 bis 2.5 % Entschäumer und 0 bis 1.5 % Thixotropieradditiv sowie ggf. weitere Additive enthält.

Zur Herstellung des erfindungsgemäßen Halbfabrikats werden 3 bis 35 Teile des Korrosionsschutzpigments bzw. der Korrosionsschutzpigment-Paste in 10 bis 67 Teilen Wasser aufgeschlämmt und während des Rührens bei ca. 300 bis 700 U/min. portionsweise der vorgelegten Metallpigmentpaste (30 bis 70 Teile) zugegeben, so daß sich ein Strömungsbild zeigt, das einem "Doughnut-Effekt" ähnelt. Anschließend wird ca. 10 bis 15 Minuten gerührt, bevor die restliche Menge zugegeben und nochmals ca. 10 Minuten bei ca. 1200 U/min. nachgerührt wird.

In einer bevorzugten Ausgestaltung der Erfindung wird vor der eigentlichen Herstellung des Halbfabrikats zunächst das Korrosionsschutzpigment angerieben bzw. nachzerkleinert. Das Anreiben erfolgt unter Verwendung der oben angegebenen Mengen in einem geeigneten Aggregat, beispielsweise in einer Perlmühle, für 5 bis 30 Minuten bei 8000 bis 12000 U/min. unter Zusatz von Wasser, eines Dispergiermittels sowie ggf. eines Entschäumers und/oder eines Thixotropieradditivs. Der Entschäumer vermindert die Schaumbildung, die durch den hohen Lufteintrag leicht auftritt; das Thixotropieradditiv verhindert das Absetzen der Pigmente während der Lagerung.

Die Teilchengröße des Korrosionsschutzpigments kann in dieser Paste gegenüber dem Ausgangspigment um bis zu 30 % verkleinert sein.

In einer besonderen Ausgestaltung der Erfindung wird das wie oben beschrieben in Wasser suspendierte Korrosionsschutzpigment bereits bei der Herstellung der Metallpigmentpaste dem Metallpigmentpulver zugegeben und mit diesem zu einer Paste mit einem Metallgehalt von 50 bis 75 % verknetet.

Nachfolgend wird die Erfindung anhand bevorzugter Ausführungsbeispiele näher erläutert:

### Beispiel 1:

6 g modifiziertes Zink-Aluminium-Polyphosphathydrat-Korrosionsschutzpigment (Heucophos® ZAPP der Firma Heubach) werden in 40 g Wasser aufgeschlämmt und portionsweise unter Rühren bei 500 U/min. zu 54 g Aluminiumpigmentpaste (Hydroxal W 4 n. 1. der Firma Eckart-Werke) gegeben, bis ein Doughnut-Effekt zu beobachten ist. Anschließend wird 10 Minuten gerührt, bevor die restliche Menge zugegeben wird und nochmals 10 Minuten bei 1200 U/min. nachgerührt wird.

Mit dem erhaltenen Halbfabrikat wird ein wäßriges Lösungssystem auf Basis Polyester mit pH 9.2 hergestellt.

Die Qualität der Stabilisierung wird mittels eines 40°C-Gasungstests fest-gestellt.

Das Halbfabrikat entwickelt in 30 Tagen 5 mm Wasserstoff, ein Halbfabrikat ohne Korrosionsschutzpigment in 30 Tagen 30 mm, der Lackansatz mit Korrosionsschutzpigment in 30 Tagen 5 mm und der Lackansatz ohne Korrosionsschutzpigment in 7 Tagen 30 mm.

### Beispiel 2:

70 g Strontium-Zink-Phosphosilikat-Korrosionsschutzpigment (HALOX® SZP 391 der Firma Lawrence-Industries) werden mit 20 g Wasser, 7 g Dispergiermittel (EFKA® 4550 der Firma EFKA ADDITIVES B. V.), 0.5 g Entschäumer (Byk® 024 der Firma Byk Chemie) und 0.1 g Thixotropiermittel (Optigel® SH der Firma Südchemie) in einer Perlmühle 15 Minuten lang bei 12000 U/min. zerkleinert.
10 g der erhaltenen Paste werden in 40 g Wasser aufgeschlämmt und die Hälfte davon unter Rühren bei 500 U/min. zu 50 g Aluminiumpigmentpaste (Hydroxal W 24 n. 1. der Firma Eckart-Werke) gegeben.
Mit der erhaltenen Paste wird ein wäßriger Lackansatz hergestellt.
Die Stabilität im 40°C-Gasungstest ist gegenüber dem nicht stabilisierten Lack wieder etwa um das 5fache erhöht, die Optik der Spritzungen ist ausgezeichnet.

### Beispiel 3:

96,2 g einer phosphororganisch vorstabilisierten wässrigen Metalure®-Suspension (Fa. Avery, 20% Aluminiumgehalt) werden mit 3,8 g einer Anreibung von 2,8 g Halox®SZP 391 in 1,0 g Wasser verrührt.

Mit dem erhaltenen Halbfabrikat wird ein 40°C-Test durchgeführt und ein wäßriger Lack (Styrol/Acrylat) hergestellt.

Die Paste und der Lack zeigen im 40°C-Test eine um den Faktor 5 erhöhte Stabilität im Vergleich zu einer Paste und einem Lack, die ohne Zusatz eines Korrosionsschutzpigments hergestellt wurden.

Die L*-Werte der optischen Prüfung sind:

| | 110° | 75° | 70° | 55° | 45° | 35° | 25° |
|---|---|---|---|---|---|---|---|
| Unstab. | 24,03 | 27,22 | 27,84 | 33,42 | 42,82 | 59,70 | 90,65 |
| 7,5% stab. | 24,72 | 27,67 | 28,53 | 34,34 | 44,23 | 61,75 | 93,57 |

### Beispiel 4:

64 g eines Aluminiumpigment-Pulvers (Vorprodukt zu HYDROXAL W 4 n. l) werden mit einer Suspension von 9 g Strontium-Zink-Phosphosilikat-Korrosionsschutzpigment (HALOX® SZP 391 der Firma Lawrence-Industries) in 18 g Wasser in einem Knetaggregat verknetet, bis eine homogene Paste entsteht.

Die so erhaltene Paste wird zur Herstellung eines wässrigen Industrielackansatzes (Styrol-Acrylatsystem) mit pH = 9.2 verwendet. Die Paste und der Lack zeigen im 40°C-Gasungstest eine um den Faktor 5 erhöhte Stabilität im Vergleich zu einer Paste und einem Lack, die ohne Zusatz eines Korrosionsschutzpigments hergestellt wurden.

### Durchführung des 40°C-Gasungstests:

In das zu untersuchende Lacksystem gibt man so viel des erfindungsgemäßen Halbfabrikats, daß der Lack ca. 10 % Aluminium enthält. Davon werden 300 g in eine Waschflasche eingewogen und diese wird mit einem Doppelkammergasblasenzähler versehen.

Es erfolgt eine Lagerung im Wasserbad bei 40°C. Der entstehende Wasserstoff wird im Aufsatz aufgefangen und die mm verdrängte Wassersäule abgelesen.

### Prüfung der optischen Eigenschaften:

Die hergestellten Lackansätze wurden unter gleichen Bedingungen auf einem Langguth-Spritzautomaten appliziert und 30 min bei 120°C eingebrannt.

Zur Untersuchung der optischen Eigenschaften wurden die L*- Werte mit dem Optronik Multiflash-Goniophotometer bei acht verschiedenen Winkeln gemessen, um das Abkippverhalten, den Flop, näherungsweise zu bestimmen.

## Patentansprüche

1. Fließ- und pumpfähiges, gasungsstabiles wäßriges Halbfabrikat zur Herstellung von Farben und Lacken umfassend
- Wasser
- ein vorstabilisiertes Metallpigment und
- ein Korrosionsschutzpigment.

2. Halbfabrikat nach Anspruch 1, **dadurch gekennzeichnet, daß** das Metallpigment aus Aluminium, Kupfer, Zink, Zinn oder Legierungen aus diesen Elementen besteht.

3. Halbfabrikat nach Anspruch 1 oder 2, **dadurch gekennzeichnet, daß** das Metallpigment durch phosphororganische Verbindungen und Basen, durch Beschichtung mit Silicaten oder organisch modifizierten Silianen, durch Polymere (z. B. Acrylate) oder durch Phosphorsäureester vorstabilisiert ist.

4. Halbfabrikat nach einem der Ansprüche 1 bis 3, **dadurch gekennzeichnet, daß** das Korrosionsschutzpigment aus der Gruppe Strontium-Zink-Phosphosilikat, Zink-Aluminiumpoly-Phosphathydrat, Zink-Calcium-Aluminium-Strontium-Phosphatsilikathydrat, Zink-Calcium-Strontium-Orthophosphatsilikathydrat, Strontium-Aluminium-Polyphosphathydrat, Calcium-Aluminium-Polyphosphatsilikathydrat und Natrium- und/oder Calcium- und/oder Zink-Molybdat oder Phospho-Molybdat und Zinkphosphatkomplex ausgewählt wird.

5. Stabilisierte wässrige Metallpigmentpaste, **dadurch gekennzeichnet, daß** sie 5 bis 20 % eines Korrosionsschutzpigments aus der Gruppe Strontium-Zink-Phosphosilikat, Zink-Aluminium-Polyphosphathydrat, Zink-Calcium-Aluminium-Strontium-Phosphatsilikathydrat, Zink-Calcium-Strontium-Orthophosphatsilikathydrat, Strontium-Aluminium-Polyphosphathydrat, Calcium-Aluminium-Polyphosphatsilikathydrat und Natrium- und/oder Calcium- und/oder Zink-Molybdat oder Phospho-Molybdat und Zinkphosphatkomplex enthält.

6. Verfahren zur Herstellung des Halbfabrikats, **dadurch gekennzeichnet, daß** folgende Schritte durchgeführt werden:
3 bis 35 Teile des Korrosionsschutzpigments bzw. einer Korrosionsschutzpigment-Paste werden in 10 bis 67.Teilen Wasser aufgeschlämmt und
während des Rührens bei ca. 300 bis 700 U/min. portionsweise der vorgelegten Metallpigmentpaste (30 bis 70 Teile) zugegeben, so daß sich ein Strömungsbild zeigt, das einem "Doughnut-Effekt" ähnelt, anschließend wird ca. 10 bis 15 Minuten gerührt, dann wird die restliche Menge zugegeben und nochmals ca. 10 Minuten bei ca. 1200 U/min. nachgerührt.

7. Verfahren zur Herstellung des Halbfabrikats nach Anspruch 6, **dadurch gekennzeichnet, daß** das Korrosionsschutzpigment in einem geeigneten Aggregat, beispielsweise in einer Perlmühle, für 5 bis 30 Minuten bei 8000 bis 12000 U/min. unter Zusatz von Wasser, eines Dispergiermittels sowie ggf. eines Entschäumers und/oder eines Thixotropieradditivs angerieben wird.

8. Verfahren zur Herstellung der Metallpigmentpaste, **dadurch gekennzeichnet, daß** 60 bis 80 Teile des Metallpigmentpulvers einer Suspension von 5 bis 25 Teilen des Korrosionsschutzpigments in 18 Teilen Wasser zugegeben und mit diesem in einem Knetaggregat zu einer Paste verknetet wird.

9. Verwendung eines Halbfabrikats bzw. einer Metallpigmentpaste nach einem der vorstehenden Ansprüche zur Herstellung von Farben und Lakken.

## Claims

1. A flowable and pumpable aqueous semifinished product of gassing stability for the production of paints and lacquers, comprising
- water;
- a pre-stabilized metallic pigment; and
- an anticorrosive pigment.

2. A semifinished product according to claim 1, **characterized in that** the metallic pigment consists of aluminum, copper, zinc, tin or alloys of these elements.

3. A semifinished product according to claim 1 or 2, **characterized in that** the metallic pigment is pre-stabilized by phosphor-containing organic compounds and bases, by coating with silicates or organically modified silanes, by polymers (for example acrylates) or by phosphoric acid ester.

4. A semifinished product according to one of claims 1 to 3, **characterized in that** the anticorrosive pigment is selected from the group of strontium zinc phosphosilicate, zinc aluminum polyphosphate hydrate, zinc calcium aluminum strontium phosphate silicate hydrate, zinc calcium strontium orthophosphate silicate hydrate, strontium aluminum polyphosphate hydrate, calcium aluminum polyphosphate silicate hydrate, and sodium and/or calcium and/or zinc molybdate or phospho-molybdate and zinc phosphate complex.

5. A stabilized aqueous metallic paste, **characterized in that** it contains 5 to 20 % of an anticorrosive pigment of the group of strontium zinc phosphosilicate, zinc aluminum polyphosphate hydrate, zinc calcium aluminum strontium phosphate silicate hydrate, zinc calcium strontium orthophosphate silicate hydrate, strontium aluminum polyphosphate hydrate, calcium aluminum polyphosphate silicate hydrate, and sodium and/or calcium and/or zinc molybdate or phospho-molybdate and zinc phosphate complex.

6. A method for the production of the semifinished product, **characterized in that** the following steps are performed:
3 to 35 parts of the anticorrosive pigment or of the anticorrosive pigment paste are suspended in 10 to 67 parts of water, and during stirring at approximately 300 to 700 rpm, they are added in portions to the prepared metallic pigment paste (30 to 70 parts) for a flow pattern to show that is similar to a "doughnut effect"; then stirring takes place for approximately 10 to 15 minutes, after which the remaining quantity is charged and another stirring job takes place at approximately 1200 rpm for approximately 10 minutes.

7. A method for the production of the semifinished product according to claim 6, **characterized in that** the anticorrosive pigment is pasted in a suitable aggregate, for instance in a bead mill, for a period of 5 to 30 minutes at 8000 to 12000 rpm with the addition of water, a dispersing agent as well as possibly a defoamer and/or a thixotroping additive.

8. A method for the production of the metallic paste, **characterized in that** 60 to 80 parts of the metallic powder are added to a suspension of 5 to 25 parts of the anticorrosive pigment in 18 parts water and are kneaded together there-with in a kneading aggregate, forming a paste.

9. Use of a semifinished product and of a metallic paste according to one of the preceding claims for the production of paints and lacquers.

## Revendications

1. Semi-produit aqueux, instable aux gaz, fluide et pompable destiné à la préparation de couleurs et peintures comprenant
- de l'eau
- un pigment métallique préstabilisé et
- un pigment anticorrosion.

2. Semi-produit selon la revendication 1, **caractérisé en ce que** le pigment métallique est constitué d'aluminium, de cuivre, de zinc, d'étain ou d'alliages de ces éléments.

3. Semi-produit selon la revendication 1 ou 2, **caractérisé en ce que** le pigment métallique est préstabilisé par des composés et des bases phosphore organique, par enduction avec des silicates ou des silanes organiquement modifiés, par des polymères (par exemple acrylates) ou par des esters de l'acide phosphorique.

4. Semi-produit selon l'une quelconque des revendications 1 à 3, **caractérisé en ce que** le pigment anticorrosion est choisi dans le groupe phosphosilicate de strontium et de zinc, hydrate de zinc-aluminiumpoly-phosphate, silicate hydraté de phosphate de zinc-calcium-aluminium-strontium, silicate hydraté d'orthophosphate de zinc-calcium-strontium, hydrate de polyphosphate de strontium-aluminium, silicate hydraté de polyphosphate de calcium-aluminium et molybdate ou phosphomolybdate de sodium et/ou de calcium et/ou de zinc et complexe de phosphate de zinc.

5. Pâte de pigment métallique aqueuse stabilisée, **caractérisée en ce qu**'elle contient 5 à 20% d'un pigment anticorrosion du groupe phosphosilicate de strontium-zinc, d'hydrate polyphosphaté de zinc-aluminium, de silicate hydraté de phosphate de zinc-calcium-aluminium-strontium, de silicate hydraté d'orthophosphate de zinc-calcium-strontium, d'hydrate polyphosphaté de strontium-aluminium, de silicate hydraté de polyphosphate de calcium-aluminium et de molybdate ou phosphomolybdate de sodium et/ou de calcium et/ou de zinc et un complexe de phosphate de zinc.

6. Procédé de préparation du semi-produit, c**aractérisé en ce que** l'on réalise les étapes suivantes :
On met en suspension 3 à 35 parties du pigment anticorrosion ou d'une pâte de pigment anticorrosion dans 10 à 67 parties d'eau et on ajoute pendant l'agitation à env. 300 à 700 t/min, par portions, la pâte de pigment métallique initiale (30 à 70 parties) de manière à obtenir un faciès d'écoulement qui ressemble à un "effet de Doughnut", on agite ensuite pendant 10 à 15 minutes, puis on ajoute la quantité restante et on agite à nouveau pendant 10 minutes à environ 1200 t/min environ.

7. Procédé de préparation du semi-produit selon la revendication 6, **caractérisé en ce que** l'on triture le pigment anticorrosion dans un appareil approprié, par exemple dans un broyeur à billes pendant 5 à 30 minutes à 8000 à 12000 t/minutes tout en ajoutant de l'eau, un dispersant ainsi que, le cas échéant, un agent anti-mousse et/ou un additif de thixotropie.

8. Procédé de préparation de la pâte de pigment métallique, **caractérisé en ce que** l'on ajoute 60 à 80 parties de la poudre de pigment métallique à une suspension de 5 à 25 parties de pigment anticorrosion dans 18 parties d'eau et **en ce qu'**on la malaxe en une pâte dans un malaxeur.

9. Utilisation d'un semi-produit ou d'une pâte de pigment métallique selon l'une quelconque des revendications précédentes pour la préparation de peintures et de vernis.
